# EUROPÄISCHE PATENTSCHRIFT

(11) **EP 2 646 835 B1**
(45) Veröffentlichungstag und Bekanntmachung des Hinweises auf die Patenterteilung: **25.01.2017**
(21) Anmeldenummer: 11804802.4
(22) Anmeldetag: 21.11.2011
(51) Int. Cl.: G01N 35/10, G01N 1/38, G01N 35/00, G01N 1/40, G01N 30/00, G01N 30/06, H01J 49/04

(54) **VERFAHREN UND VORRICHTUNG ZUR AUTOMATISCHEN ERFASSUNG VON SUBSTANZEN FÜR ANALYSEN**
METHOD AND DEVICE FOR AUTOMATICALLY DETECTING SUBSTANCES FOR ANALYSES
PROCÉDÉ ET DISPOSITIF DE DÉTECTION AUTOMATIQUE DE SUBSTANCES POUR DES ANALYSES

(30) Priorität: 30.11.2010 CH 20072010
(43) Veröffentlichungstag der Anmeldung: 09.10.2013
(73) Patentinhaber: Camag AG, 4132 Muttenz (CH)
(72) Erfinder: LOPPACHER, Matthias, CH-4054 Basel (CH); ALTMEYER, Manuel, CH-8640 Rapperswil (CH); FANKHAUSER, Christoph, CH-4416 Bubendorf (CH); SCHRANZ, Urs, CH-4144 Arlesheim (CH)
(74) Vertreter: Fleck, Hermann-Josef
(86) Internationale Anmeldenummer: PCT/IB2011/055211
(87) Internationale Veröffentlichungsnummer: WO 2012/073148

(56) Entgegenhaltungen:
- WO-A1-2011/010265
- US-A- 5 641 682
- PAUL ABU-RABIE ET AL: "Direct Quantitative Bioanalysis of Drugs in Dried Blood Spot Samples Using a Thin-Layer Chromatography Mass Spectrometer Interface", ANALYTICAL CHEMISTRY, Bd. 81, Nr. 24, 15. Dezember 2009 (2009-12-15), Seiten 10275-10284, XP55018149, ISSN: 0003-2700, DOI: 10.1021/ac901985e
- HEINRICH LUFTMANN: "A simple device for the extraction of TLC spots: direct coupling with an electrospray mass spectrometer", ANALYTICAL AND BIOANALYTICAL CHEMISTRY, Bd. 378, Nr. 4, 1. Februar 2004 (2004-02-01), Seiten 964-968, XP55018167, ISSN: 1618-2642, DOI: 10.1007/s00216-003-2293-3
- GARY J. VAN BERKEL ET AL: "Application of a Liquid Extraction Based Sealing Surface Sampling Probe for Mass Spectrometric Analysis of Dried Blood Spots and Mouse Whole-Body Thin Tissue Sections", ANALYTICAL CHEMISTRY, Bd. 81, Nr. 21, 1. November 2009 (2009-11-01), Seiten 9146-9152, XP55018157, ISSN: 0003-2700, DOI: 10.1021/ac901712b
- JULIEN DÉGLON ET AL: "On-line desorption of dried blood spot: A novel approach for the direct LC/MS analysis of [mu]-whole blood samples", JOURNAL OF PHARMACEUTICAL AND BIOMEDICAL ANALYSIS, Bd. 49, Nr. 4, 1. Mai 2009 (2009-05-01), Seiten 1034-1039, XP55018176, ISSN: 0731-7085, DOI: 10.1016/j.jpba.2009.02.001
- Matthias Loppacher ET AL: "Direct extraction/analysis of Dried Blood Spots(DBS): A fully automated system including spot localization, internal standard (IS) application and multiple batch analysis", , 9. Juni 2011 (2011-06-09), XP55018154, Denver Gefunden im Internet: URL:http://www.camag.com/downloads/protect ed/DBS_MS_500/ASMS_2011_A%20fully%20automa ted%20system%20including%20spot%20localiza tion.pdf [gefunden am 2012-02-01]

## Beschreibung

Die vorliegende Erfindung betrifft Verfahren und Vorrichtung zur automatischen Erfassung von Substanzen für Analysen gemäss Oberbegriff des Patentanspruchs 1.

In der Medikamentenentwicklung ist das Screening grosser Mengen von Blutproben eine unverzichtbare Untersuchungsmethode wie auch durch die Anforderungen der regulierenden Behörden absolute Bedingung. In den letzten Jahren hat die Analyse von Dried Blod Spots (DBS) wegen ihren grossen Vorteilen gegenüber konventionellen Blutproben die Aufmerksamkeit auf sich gezogen. Insbesondere die signifikante Reduktion des benötigten Blutvolumens sowie das einfachere Versenden und Lagern führen zu einer deutlichen Einsparung bei den Gesamtkosten für Blutanalysen.

Zusätzlich kann durch die geringere Menge an benötigtem Blut der Verbrauch von Versuchstieren deutlich gesenkt werden, was in Einklang mit den 3R Anforderungen für Tierversuche geht (replacement, reduction, refinement). Für DBS-Analysen werden typischerweise pro Messung nur 15 µl Blut benötigt, welches auf ein Filterpapier aufgetragen (sogenannte DBS-Karten), getrocknet, versendet und in einem zentralen Labor mit einem Massenspektrometer (MS) analysiert wird. Vor der MS-Analyse muss die Blutprobe aus der DBS-Karte extrahiert werden. Das stellt momentan noch einen entscheidenden Aufwand zum Nachteil der DBS-Technik dar, da dieser Prozess bis heute noch nicht automatisiert ist. Die heute bekannte DBS-Analyse ist zeitund kostenaufwendig und die Vorteile dieser Methode kommen noch nicht voll zur Geltung. Ein vollautomatisches System für die Extraktion von DBS-Karten mit direkter Kopplung zum MS ist daher für die Blut analysierende Industrie von grösstem Interesse.

Das Verfahren hat sich bewährt und wird heute genauso für andere Substanzproben, wie z.B. Knochenmark, Gehirn- und Gelenkflüssigkeiten, Sperma, Stuhl, Urin, Blutplasma etc. ebenfalls angewendet, welche allgemein mit "Dried Matrix Spot (DMS) " bezeichnet werden. Speziell für eingetrocknete biologische Proben, welche in Tropfenform aufgetragen wurden sind die bekannten Verfahren aufwendig, zeitraubend und für einige Analysen zu rudimentär um präzise und verlässliche Daten zu gewährleisten. Um die Proben zu transportieren und z.B. in Reagenzgläsern den Messgeräten zuzuführen, müssen diese normalerweise in Lösung, Emulsion oder in verdünnter Mischungsform vorliegen. Solche Proben enthalten relativ kleine Anteile der gesuchten und zu beurteilenden Substanzen. Speziell im Drogenscreening oder bei Dopingprüfungen, aber auch bei allen andern routinemässigen Untersuchungen wäre es wünschenswert, zur Messung möglichst nur die gewünschten Substanzen in möglichst haltbarer Form ähnlich der oben beschriebenen DBS-Proben zu haben, um präzise Messungen in kurzer Zeit durchführen zu können und den Aufwand für Transport und Lagerung minimal zu halten. Solche Proben können platzsparend aufbewahrt und zu einem späteren Zeitpunkt analysiert werden.

In den Artikeln "A simple device for the extraction of TLC spots: direct coupling with an electrospray mass spectrometer" (Heinrich Luftmann, ANALYTICAL AND BIOANALYTICAL CHEMISTRY, Bd. 378, Nr. 4, Seiten 964-968), "Application of a liquid extraction based sealing surface sampling probe for mass spectrometric analysis of dried blood spots and mouse whole-body thin tissue sections" (Gary J. Van Berkel et al, ANALYTICAL CHEMISTRY, Bd. 81, Nr. 21, Seiten 9146-9152) und "Online desorption of dried blood spot: A novel approach for the direct LC/MS analysis of [mu]-whole blood samples" (Julien Déglon et al, Journal of pharmaceutical and biomedical analysis, Bd. 49, Nr. 4, Seiten 1034-1039) und in der Patentanmeldung Nr. WO2011/010265 werden Verfahren und die zugehörigen Vorrichtungen vorgestellt, mit denen Hilfe für flüssige, hochviskose, getrocknete, koagulierte oder eingedickte, in fester Form vorliegende, eingetrocknete und biologisch aktive, oder zur Stabilisation mit Schutzkolloiden versetzte Proben erfasst werden können. Im Artikel "Direct Quantitative Bioanalysis of Drugs in Dried Blood Spot Samples Using a Thin-Layer Chromatography Mass Spectrometer Interface" (Paul Abu-Rabie et al, ANALYTICAL CHEMISTRY, Bd. 81, Nr. 24, Seiten 10275-10284) wird das folgende Verfahren beschrieben. Zuerst werden die DBS-Proben visuell erkannt und manuell unter einem Extraktionskopf positioniert und eingeklemmt. Die Proben werden somit räumlich dicht umschlossen und die gewünschten Substanzen danach aus der Probe extrahiert, indem eine Flüssigkeit über eine Zuleitung zugeführt wird, die Probe durchströmt und über eine Ableitung abfliesst. Schliesslich wird der Extraktionskopf durch manuelle Zurückspülung von Rückständen gereinigt, und der Prozess wird mit einer neuen Probe wiederholt. Nach jeder Extraktion werden die gewünschten Substanzen zur Weiterverarbeitung weitergereicht. Vorrichtung und Methode eignen sich auch für die Analyse von Mikroskopieschnitten, welche Substanzen in entsprechenden Konzentration enthalten. Auch kleine Mengen wie auch Konzentrationen der zu prüfenden Substanzen werden damit zuverlässig und genau analysiert.

Ein Problem der bisherigen Verfahren stellt in der Praxis die grosse Anzahl der zu analysierenden Proben dar, welche in kurzer Zeit analysiert werden sollten. Den Labors fehlt schlicht die Zeit genügend Proben zu analysieren, um in der Folge aussagekräftige Statistiken aufstellen zu können. Gerade bei klinischen Untersuchungen müsste man eine Vielzahl von Proben messen, um statistische Werte zu haben und darauf basierend mit einiger Sicherheit eine Aussage machen zu können.

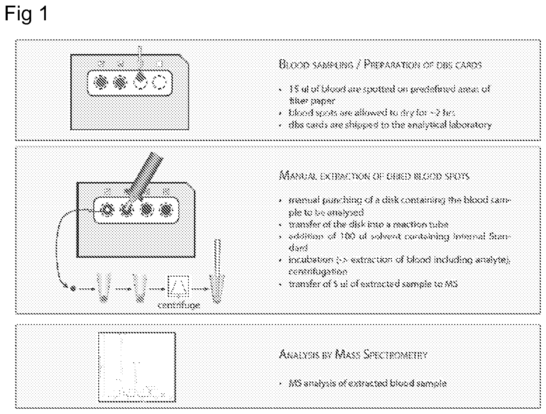

Das Ausstanzen der DBS-Disks wird heute, wie Fig. 1 schematisch darstellt, manuell durchgeführt. Weil das Verfahren manuell aufwendig ist und der Aufwand dadurch zu viel Zeit in Anspruch nimmt, hat sich dieses Vorgehen und Verfahren noch nicht wirklich durchgesetzt. Durch das wachsende Interesse an der DBS-Technologie wurden automatische Ausstanzgeräte eingeführt (s. Patent US 5,641,682 und BSD robotics, Perkin Elmer). Die dort vorgestellte Methode für DBS wird auch für DMS erfolgreich eingesetzt. Diese Systeme stanzen automatisch eine Disk von z.B. 3.2 mm Durchmesser aus einer DBS-Karte in ein kleines Glassgefäss (Vial). Das Extraktionsmittel muss dann hinzugefügt, die Probe mit einem Schüttler oder Ultraschall zwecks besserer Extrahierbarkeit behandelt und danach noch dem MS zugeführt werden. Das zeitaufwändige Verfahren mag Grund sein, dass bis jetzt nur wenige Gruppen über eine Online-Extraktion von DBS-Karten berichtet haben.

Andere Techniken wie das Ausstanzen der Disks und Verpacken in Kartuschen mit nachfolgender Extraktion oder die "desorption electrospray ionisation" (DESI) wurden von der Industrie untersucht, aber keine der Techniken weist die entsprechende Empfindlichkeit, oder Einfachheit auf, welche angestrebt wird und erforderlich ist.

Trotz wachsendem Interesse der Pharmamulties an der DBS-Technik existiert bis dato kein vollautomatisches System, bei welchem der Benutzer die DBS-Karten ohne weitere Interaktion dem System zur zuverlässigen und präzisen Analyse übergeben kann (s. das Dokument "Direct extraction/analysis of Dried Blood Sports (DBS): A fully automated system including spot localization, internal standard (IS) application and multiple batch analysis" (Matthis Loppacher et al, 9.Juni 2011, Denver)).

Die vorliegende Erfindung stellt sich nunmehr die Aufgabe ein automatisiertes Verfahren und eine Vorrichtung zur automatischen Erfassung von Proben, welche typischer weise aus einer Matrix z.B. Blut und anderen Substanzen besteht, für Analysen der eingangs genannten Art derart zu verbessern, dass die Vorteile bekannter Verfahren und Vorrichtungen erhalten bleiben, jedoch schnell und ohne Handarbeit eine Vielzahl von Proben verarbeitet und deren Daten erfasst werden können.

Diese Aufgabe löst das Gerät mit den Merkmalen des Patentanspruches 1. Weitere erfindungsgemässe Merkmale gehen aus den abhängigen Ansprüchen hervor und deren Vorteile sind in der nachfolgenden Beschreibung erläutert.

In der Zeichnung zeigt:
- Fig 1: Systematische Darstellung eines manuellen Verfahrens
- Fig 2: Systematische Darstellung eines automatisierten Verfahrens

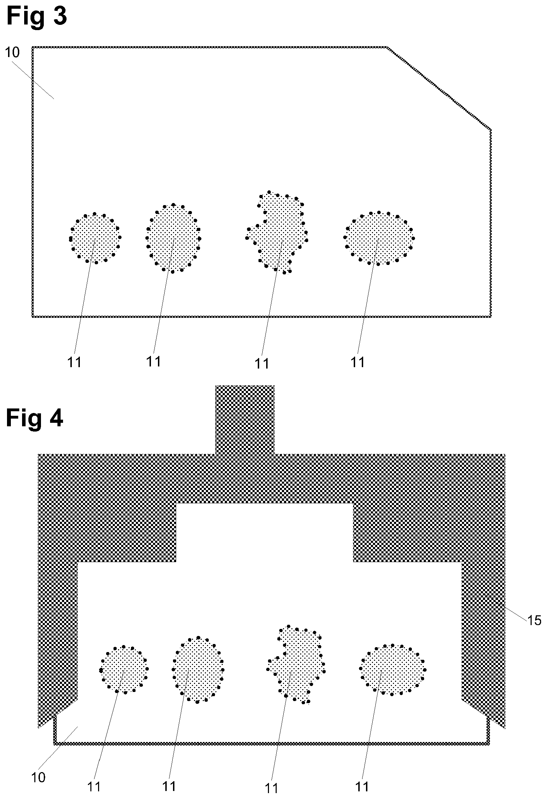

- Fig 3: Platte mit Proben.
- Fig 4: Ansicht eines Greifers mit Platte.
- Fig 5: Seitenansicht eines Greifers.
- Fig 6: Extraktionskopf, Probe und Gegenextraktionskopf
- Fig 7: Schnitt durch Extraktionskopf, Spüle und Gegenextraktionskopf

Die Figuren stellen mögliche Ausführungsbeispiele dar, welche in der nachfolgenden Beschreibung erläutert werden.

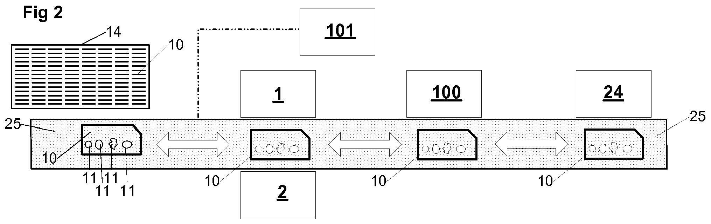

Ein Robotersystem hier kurz "Robotik" 25 genannt und in Fig 2 schematisch dargestellt, wird zum Handling der DMS-Karten mit einem für die Automatisierung geeigneten neu entwickelten Greifer 15 ausgerüstet, welcher eine Platte 10 dem Magazin 14 entnimmt und einem Extraktionskopf 1 / Gegenextraktionskopf 2, einem Messkopf 100 zur optischen Erkennung der DMS-Karten und dem Auftragekopf 24 zuführt, was die zeitsparende, zuverlässige und reproduzierbare Analyse von mehreren Hundert DMS-Karten in kurzer Zeit ohne menschliche Interaktion erlaubt.

Ein mögliches System sieht wie folgt aus: In einem oder mehreren Racks eines Magazins 14 (Fig 2) sind Platten 10 gelagert. Eine mögliche Ausführungsform entspricht in etwa einem System, wie es früher für die Lagerung von Diapositiven für die Analoge Projektion verwendet wurde. Durch die hohen Anforderungen im Bereich der Zuverlässigkeit sind jedoch die Transportsysteme welche für die Diapositiv-Projektion verwendet wurden viel zu unzuverlässig und erlauben zudem nur den Transport zu einer Station ausserhalb der Racks. Durchgebogene Kartonrahmen erlaubten mit solchen Systemen nur ungenügende Zuverlässigkeiten. Die Racks wurden daher so optimiert, dass die den Diapositiven entsprechenden Platten nicht herausgeschoben werden, sondern mit einem speziell entwickelten Greifer 15 an einer oder mehreren Seiten, idealer weise an drei Seiten, gegriffen werden. Die Robotik 25 führt den Greifer 15, welcher die Platten 10 fest und flach hält und nach Bedarf zu den Stationen Messkopf 100, Extraktionskopf 1 / Gegenextraktionskopf 2 und Auftragekopf 24 zu- und weggeführt (fig 2).

Eine Ausführungsform der Racks stellt die mehrseitige Führung, z.B. links und rechts dar, wobei ausserhalb dieser Führung im äusseren Bereich des Rahmens der Platten 10 genügend Platz für das sichere Greifen der Platten 10 vorhanden ist. Die beschriebene Ausführungsform stellt nur eine mögliche Variante dar. Ein Greifen findet mit dem speziell entwickelten Greifer nicht nur punktuell statt sondern mindestens auf einer Linie oder länglichen Fläche sowie zusätzlich mittels eines speziellen Musters wie z.B. Rippen, Spitzen oder allgemein Erhöhungen, welche auf dem Greifer in einem Teilbereich angeordnet sind statt. Die Platten werden so einerseits durch die Erhöhungen in einem Teilbereich fest fixiert und andererseits durch die Linien oder länglichen Flächen geführt. Der Greifer nimmt somit zwei klare Funktionen wahr: Die Führung, welche enorm wichtig ist für Platten 10 welche nicht formsteif flach sind. Solche Platten 10 werden durch die Führung des Greifers 15 in einen ebenen und flachen Zustand gebracht und gehalten. Flache und ebene Platten 10 oder flächig gehaltene Platten 10 sind in den nachfolgenden Stationen zuverlässiger und einfacher zu verarbeiten.

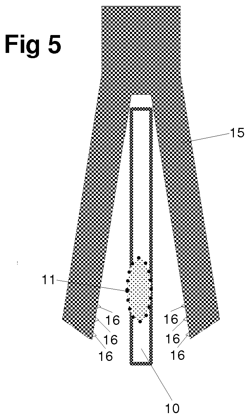

Die Fixierung, welche die Platten 10 absolut fest halten muss, ist wichtig für die zuverlässige Funktion der Robotik 25. Es ist eine absolut erforderliche Bedingung, um die Platten von der Entnahme aus dem Rack durch die Robotik 25 bis zur Rückführung in das Rack sicher im Greifer zu halten und die Platten an den einzelnen Stationen präzise positionieren zu können. Zu diesem Zweck dringen Rippen, Spitzen oder anderweitige Erhöhungen 16 des Greifers 15 (Fig 5) oberflächlich in die Platten 10 ein.

Bekannte Greifersysteme weisen diesbezüglich Defizite in der Führung und/oder in der Fixierung auf. Deshalb wurde bei der Entwicklung des hier vorgestellten Greifers 15, der Führung und der Fixierung der Platten 10 spezielle Aufmerksamkeit gewidmet.

Der Messkopf 100 analysiert die optischen Eigenschaften der Platte. Eine einfache Ausführungsform ist ein punktueller optischer Sensor, welcher optische Eigenschaften, Form und Position der Probe 11 erkennt. Er misst auch die Helligkeit der Probe 11 als ganzes oder in vielen Punkten, Absorption und Fluoreszenz, aufgebrachte Markierungen und Barcodes misst, an einen Mikroprozessor 101 zur weiteren Analyse und Berechnung von Parametern weitergibt. Im allgemeinen wird eine Digitalkamera verwendet, welche alle diese Funktionen wahrnehmen kann. Eine leistungsfähigere Variante stellt die Verwendung einer Digitalkamera mit integrierter Auswerteelektronik, einer sogenannten Smartcam, dar, welche es erlaubt diese Parameter direkt in der Kamera zu berechnen und an den Mikroprozessor 101 oder ein weiterverarbeitendes System weiterzureichen. Es hat sich gezeigt, dass die Position und Form der Proben auf der Platte 10, die Helligkeit und die Homogenität der Helligkeit von entscheidender Wichtigkeit sind. Einerseits gibt es für die Proben 11 auf der Platte 10 Akzeptanzkriterien und andererseits ist es wichtig, dass Extraktionskopf 1 und Gegenextraktionskopf 2 im Zentrum der Probe 11 angesetzt werden. Die Automatisierung dieser Schritte bringt gegenüber manuellen Methoden grosse Vorteile, indem die durch die Robotik 25 geführte und den Messkopf 100 kontrollierte Positionierung viel präziser und zuverlässiger erfolgen wird. Man vermeidet dadurch viele Messfehler, die im manuellen Verfahren entstehen können. Würde die Probe 11 z.B. nur teilweise oder am Rand getroffen resultierte ein zu kleiner oder verfälschter Messwert, was insbesondere in der Medikamentenentwicklung fatale Folgen haben kann. Der Messkopf liefert an die Robotik die genauen Positionsdaten der Proben 11, was eine präzise Ausrichtung des Extraktionskopfs 1 und Gegenextraktionskopfes 2 zu einer Probe 11 auf der Platte 10 erlaubt und zuverlässigere Messdaten garantiert.

Im Weiteren kann der Messkopf 100 folgende Aufgaben übernehmen: Einlesen von Barcodes zur Verifizierung der Probenidentität, Identifizierung von z.B. angekreuzten Checkboxen auf der Platte 10, welche die Spots als nicht verwendbar oder gar Ausschuss bezeichnen. An sich können sämtliche optisch erkennbaren Markierungen wie auch Text erkannt werden. Wird als Messkopf 100 eine Smartcam eingesetzt, können die Daten direkt ausgewertet werden. Benutzt man einen einfachen Messkopf 100, werden die Rohdaten dem Mikroprozessor 100 zugeführt, welcher sie auswertet und entsprechende Signale an die Robotik 25 weiter gibt. Wird ein einfacher Messkopf 100 eingesetzt der ohne flächige optische Erkennung misst, wie z.B. einem Punkt oder Strichsensor wird die Platte 10 mit der Probe 11 relativ zum Messkopf 100 für eine Vielzahl von Messungen bewegt. Die Messungen werden dann durch den Mikroprozessor 101 rechnerisch zu einem Gesamten zusammengefügt, sodass die entsprechenden Informationen aus dem errechneten Gesamten abgeleitet werden können. Es ist möglich den Messkopf 100 zu den Platten 10 mit den Proben 11 zu bringen oder durch die Robotik 25 die Platten 10 mit den Proben 11 zum Messkopf zu bringen. Je nach Möglichkeiten der Robotik 25 kann auf eine Bewegung des Messkopfes 100 verzichtet werden.

Nachdem der Mikroprozessor 100 vom Messkopf 100 den Input für die genaue gewünschte Position der Probe 10 relativ zum Extraktionskopf 1 und Gegenextraktionskopf 2 erhalten hat, wird mittels der Robotik 25 und/oder der Extraktionskopfbewegung die Platte 10 mit der Probe 11, der Extraktionskopf 1 und der Gegenextraktionskopf 2 optimal aufeinander ausgerichtet. Im zusammengefügten Zustand isolieren Extraktionskopf 1 und Gegenextraktionskopf 2 nun einen Bereich der Probe 11.

Versuche haben gezeigt, dass es von Vorteil sein kann, wenn Extraktionskopf 1 und Gegenextraktionskopf 2 auf eine kontrollierte Distanz zusammengeführt werden und Platte 10 und Probe 11 nicht mittels Druck vollständig bis zum entsprechenden Gegendruck einklemmen (Fig 5). Dies soll und wird das Ausstanzen der Probe 11 auf der Platte 10 verhindern. Die kontrollierte Zusammenführung von Extraktionskopf 1 und Gegenextraktionskopf 2 kann z.B. mit einem Anschlag oder mit der präzisen, durch den Mikroprozessor 101 gesteuerten und kontrollierten, Robotik 25 erfolgen.

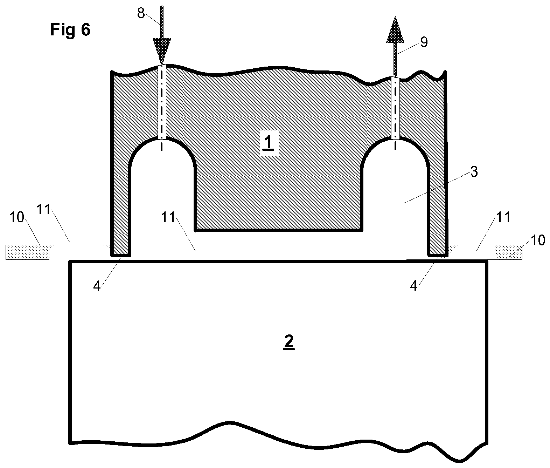

Wenn die Probe 11 nun zwischen Extraktionskopf 1 und Gegenextraktionskopf 2 positioniert ist (Fig 6), wird sie durch Flüssigkeit, welche über eine Zuleitung 8 zufliesst und über eine Ableitung 9 abfliesst möglichst homogen durchströmt. Optimalerweise wird die Probe 11 zusätzlich auf einem möglichsts langen Pfad durchströmt. Eine möglichst weit voneinander entfernte Anordnung von Zuleitung 8 und Ableitung 9 oder eine Zuleitung 8 auf dem Extraktionskopf 1 und eine Ableitung 9 auf dem Gegenextraktionskopf 2 (durch die Probe 11) sind gute Lösungen, wobei die Kombination der beiden Massnahmen die bevorzugte Lösung darstellt.

Für die Analyse wird ein sog. DMS-MS (Dried Matrix Spot Massenspektrometer) System verwendet. D.h. das Extrat der Dried Matrix Sports (DMS) wird an ein Massenspektormeter (MS) weitergeleitet. Die Vorteile des vollautomatischen DMS-MS Systems sind folgende:
- Keine zeitaufwendigen manuellen Prozesse.
- Reduktion Falschmessungen aufgrund von Fehlern des Personals.
- Online-Extraktionen mit kleinen Volumen (konzentrierte Proben).
- Verbesserte Detektionsempfindlichkeit (Messung geringerer Konzentrationen möglich).
- System mit Probenidentifikation (Barcodeleser).
- Schnelle und einfache Extraktion direkt in das Massenspektrometer.
- Kleinere Mengen an teurem internem Standard notwendig.

Das der Erfindung zugrunde liegende vollautomatische Verfahren mit dem DMS-MS Extraktionssystem wird die Analyse von DMS-Proben entscheidend vereinfachen und weist gegenüber der manuellen wie auch der teilweise automatisierten Technik (ausstanzen) entscheidende Vorteile auf.

Das beschriebene Extraktionssystem ist die erste ökonomische Alternative zur konventionellen Blutanalyse und wird die Verbreitung dieser zeit-, kosten- und tiersparenden Technik in der Pharmakologie und Toxikologie unterstützen.

### Einklemm- & Dichtprozess (Fig 6):

Die sich auf der Platte 10 befindliche Probe 11 wird zwischen Extraktionskopf 1 und Gegenextrationskopf 1 eingeklemmt. Durch die Komprimierung des Bereichs der Probe 11 auf und in der Platte 10 im Bereich wo die Dichtkante 4 zu liegen kommt, entsteht für Flüssigkeiten und bevorzugterweise auch für Gase eine dichte in sich geschlossene Dichtlinie, womit die Probe 11 vom Extraktionskopf 1 und Gegenextraktionskopf 2 bis auf Zuleitung 8 und Ableitung 9 räumlich dicht umschlossen wird. Die erwähnte Komprimierung der Dicke im Bereich der Dichtlinie kann je nach den Eigenschaften wie Härte, Dichte, Elastizität und Duktilität der Probe 11 und der Platte 10 nur in geringem Masse von 100% auf z.B. 50%, zu hohem Masse von z.B. 100% auf 10% der ursprünglichen Dicke oder gar bis auf praktisch 0% womit nur noch geringste Mengen des Materials von Probe 11 und Platte 10 sich im Bereich der Dichtlinie zwischen Extraktionskopf 1 und Gegenextraktionskopf 2 befinden. Es hat sich gezeigt, dass die Komprimierung je nach benötigter Druckfestigkeit experimentell optimiert werden muss.

### Platten & Probe

Vielfach bestehen die Platten 10 z.B. aus Filterpapieren, auf denen sich die Proben 11 z.B. in einem ungefähren Durchmesser von ca. 7mm, das Papier durchdringenden Fleck bilden (Z.B. DBS: dried blood spots, DPS: dried plasma spots, DUS: dried urine spots oder allgemein DMS: Dried Matrix Spots für eingetrocknete Flecken irgendwelcher Flüssigkeiten). Eingetrocknete Proben 10 von Bluttropfen, Blutplasmatropfen oder Urintropfen, kann die erwähnte Dichtlinie in diesem Fall z.B. mit einem 4mm Kreis umfassen, welcher idealerweise im Zentrum des Flecks gewählt wird. Dies ist jedoch nicht in jedem Fall von Bedeutung, gibt doch die Analyse im Messkopf darüber Auskunft, wo sich die beste Probe 11 befindet und steuert die Anlage über die Robotik 25 genau dort hin. Es sind jedoch praktisch alle Formen von Flecken verwendbar. Auch die Grösse der Flecken und der von der Dichtlinie umschlossenen Fläche kann je nach Anwendung variieren, Beispielhaft <1mm Ausdehnung bis >10mm für Dicken der Platte 10 von z.B. 0.5mm. Das Verhältnis der vom Durchmesser von der Dichtlinie umschlossenen Fläche zur Dicke der Platte 10 ist jedoch grösser als 0.5, bevorzugterweise grösser als 1, wobei zu grösseren Verhältnissen bis über 100 vom Prozess her keine Grenzen gesetzt sind. Versuche haben gezeigt, dass im Bereich 2 bis 10, was z.B. bei einer Dicke von 0.5mm und im Falle einer kreisförmigen Dichtlinie einem Durchmesser von 1 bis 5 mm sehr gute und reproduzierbare Resultate erreicht werden.

Blutflecken sind nur eine von vielen Möglichkeiten, wie eine solche Probe aussehen könnte. Als Platte 10 können verschiedenste Materialien verwendet werden, idealerweise sind diese Materialien jedoch komprimierbar und die Probe 11 kann zumindest teilweise aufgesaugt werden. Als Probe 11 werden in der Bioanalytik z.B. Blut, Blutplasma, Urin oder sämtliche anderen erdenklichen biologischen Flüssigkeiten auf Platten 10 aufgebracht und eintrocknet. Das Eintrocknen wird im genannten Fall als Konservierung verwendet, welche es erlaubt diese biologischem Proben ohne Kühlung aufzubewahren, zu transportieren und erst nach Tagen, Wochen oder gar Monaten zu analysieren, ohne dass dies die Analytik beeinträchtigt, wobei die maximale Lagerungsdauer natürlich zuletzt von der verwendeten Probe abhängt.

### Extraktionsprozess

Die zwischen Extraktionskopf 1 und Gegenextraktionskopf 2 bis auf Zuleitung 8 und Ableitung 9 dicht im Hohlraum 3 umfasste Probe 11 auf der Platte 10 (Fig 6) wird nun mittels einer Flüssigkeit, welche durch die Zuleitung 8 eingeleitet zumindest teilweise durchströmt. Dabei werden Teile der Probe 11 und eventuell auch Teile der Platte 10 herauslöst. Danach verlässt die Flüssigkeit mit diesen herausgelösten Teilen den Hohlraum 3 durch die Ableitung 9. Anstelle der Flüssigkeit kann ebenso auch ein Gas, gesättigter Dampf, eine Kombinationen der beiden oder ein beliebiges nicht festes Medium angewendet werden, welches dazu geeignet ist, diese Teile der Probe 11 welche von Interesse sind zu extrahieren. Es kann auch von Vorteil sein, ein Medium zu verwenden, welches sich über die Zeit ändert, was im Falle von Lösungsmitteln eine sich ändernden Mischung, einem sogenannten Gradienten entspricht. Z.B. wenn die Probe schlecht löslich ist, können die Extraktionsbedingungen angepasst werden: Sehr langsam oder via viele kurze schnelle von Wartezeiten gefolgte Fliesbewegungen oder mit erhöhter Temperatur, welche es erlauben mehr der gewünschten Substanzen aus der Probe 11 herauszulösen, was im analytischen Sinne die Effizienz der Extraktion und schlussendlich die Recovery erhöht.

### Weiterreichung des Extrakts

Das Medium, welches Teile der Probe 11 und allenfalls der Platte 10 enthält wird nun durch die Ableitung 9 weitergereicht, es wird Extrakt genannt. Dieses Extrakt besitzt idealerweise die Teile der Probe 11, welche analytisch von Interesse sind (gewünschte Substanzen), wobei das Extrakt immer eine oder mehrere Substanzen beinhalten kann. Andere Teile der Probe 11 oder der Platte 10 welche an sich unnötig und störend sind (Matrix) sollten auf das Minimum reduziert werden. Dieses Extrakt wird nun nach und nach durch neues Medium, welches durch die Zuleitung 8 in den Hohlraum eingebracht wird und danach diesen durch die Ableitung 9 wieder verlässt weitergeschoben. Das Extrakt kann einerseits durch eine unterschiedliche Zusammensetzung des Mediums, welches als erstes durch die Zuleitung 8 die Probe 11 durchströmt zum Medium welches diese im weiteren Verlauf durchströmt wie auch durch eine variierende Konzentration der gewünschten Substanzen eine inhomogene Zusammensetzung aufweisen. Anfangs stellt sich meist eine steigende Konzentration ein (Vorlauf), dann folgt die gewünschte Konzentration, welche in eine sinkende Konzentration (Nachlauf) übergeht.

Eine Möglichkeit ist nun, dass das Extrakt jeder Probe in ein oder mehrere Flaschen, sogenannte Vials abgefüllt wird. Typischenweise wird pro Probe ein Vial mit dem entsprechenden Extrakt gefüllt und die Vials in Racks von z.B. 96 Vials zur Weiterverarbeitung weiter an gängige Autosampler zur Analyse mit anderen nachfolgenden Methoden wie z.B. HPLC, HPLC-MS, HPLC-MS-MS direkt MS oder MS-MS, GC, NMR oder anderen geeigneten analytischen Methoden übergeben.

Eine weitere Möglichkeit ist, dass das Extrakt via ein Ventil in einen Behälter oder Speicher was z.B. eine Kapillare sein kann, weitertransportiert wird und nach Umschaltung dieses Ventils aus diesem Speicher wieder herausbefördert und an die nachfolgende Station direkt weitergereicht wird, z.B. durch eine Kapillare welche direkt mit dem nachfolgenden analytischen Gerät verbunden ist. Es stellt sich nun je nach Konzentration der gewünschten Substanzen das Problem, dass die Konzentration für die nachfolgende Methode zu niedrig oder zu hoch sein kann. Im ersten Fall müssen die Extraktionsbedingungen optimiert werden, im zweiten Fall ist eine Verdünnung nötig.

### Verdünnung

Weist das Extrakt für die nachfolgende Methode eine zu hohe Konzentration der gewünschten Substanzen auf muss es verdünnt werden, da jedoch im Extrakt auch Matrix vorhanden ist, stellt eine Verdünnung mit reinem Medium nur eine unzureichende Lösung des Problems dar. Idealerweise müsste z.B. ein 1:10 verdünntes Extrakt bei gleicher Gesamtmenge einen Zehntel der gewünschten Substanzen und dieselbe Menge an Matrix und allfälliger weiterer Substanzen wie eine unverdünnte Probe enthalten. Dies ist deswegen wichtig, da die Matrix das Messverhalten der nachfolgenden Methoden häufig wesentlich beeinflusst. In diesem Fall müsste daher nur ein Zehntel des Extrakts der zu analysierenden Probe 11 mit neun Zehnteln einer Probe, welche alle Substanzen der Matrix, aber nichts der gesuchten Substanz enthält, eine sogenannte Blindprobe, gemischt werden.

Dies kann am Beispiel der **Kaffeeextraktion** von koffeinhaltigem Kaffee (CAF) und solchem ohne Koffein (DECAF) veranschaulicht werden. Allgemein wird der Kaffee ähnlich wie unsere Proben durch eine durchströmende Flüssigkeit extrahiert und am Anfang der Extraktion kommt sehr starker Kaffee und nach und nach immer schwächerer Kaffee, was beim Kaffee bei normalen Mengen einem mittel konzentrierten normalen Kaffee (NORM) in einer Kaffeetasse entspricht und bei geringen Mengen einem sehr konzentrierten Ristretto (RIST) in einer z.B. zehnmal kleineren Ristrettotasse. Wenn wir nun den Koffeingehalt eines NORM CAF in einer Kaffeetasse bestimmen wollen aber unsere Methode der Analyse so empfindlich ist, dass sie bei dieser Konzentration von Koffein bereits in Sättigung geht, können wir nicht einfach ein RIST CAF mit Wasser auf Kaffeetassenmenge verdünnen, da diese Verdünnung eine ganz andere Zusammensetzung als der NORM CAF hätte und die Messung dabei auch sehr unterschiedlich herauskäme. An sich müssten wir eine Tasse NORM CAF mit neun Tassen NORM DECAF mischen und daraus eine Tasse entnehmen und darin die Koffeinkonzentration messen. Wir würden also total zehn Tassen Kaffee benötigen, was für die Messung eine zu grosse Menge wäre. Wenn wir aber aus einer Tasse NORM CAF (Substanz, alsoKoffein plus Matrix) einen Zehntel und aus einer Tasse NORM DECAF (nur Matrix) neun Zehntel entnehmen und in einer dritten Tasse zusammenmischen, funktioniert dies. Natürlich unter der Voraussetzung, dass der Kaffe in den Tassen homogen vorhanden ist.

Die homogene Mischung ist bei unserer beschriebenen Extraktion der Probe 11 das Problem, da üblicherweise das Extrakt in Leitungen (sehr dünnen Kapillaren) weitergeleitet wird und es sich nicht automatisch homogen mischt, sodass wir auch keinen repräsentativen Zehntel des Extrakts der Probe und neun Zehntel des Extrakts der Blindprobe auf einfache Weise entnehmen können. Wie beim Kaffee muss daher vor der Entnahme des Zehntels eine Mischung der gesamten Extraktion der Probe 11 stattfinden, idealerweise auch vor der Entnahme der neun Zehntel der Blindprobe. Wird eine Verdünnung auf ein Hundertstel angestrebt, ist die Mischung der Blindprobe nicht mehr von so grosser Wichtigkeit, da sowieso bis auf ein Prozent das gesamte Extrakt der Blindprobe verwendet wird, es kann daher vernachlässigt werden, allerdings kommt dann der homogenen Mischung des Extrakts der Probe 11 eine sehr grosse Bedeutung zu, da von dieser nur ein Prozent verwendet wird.

Wir füllen daher eine erste Extraktion einer Blindprobe in einen ersten Speicher, mischen den gesamten Inhalt des ersten Speichers homogen, z.B. mit einem im Speicher eingebauten Magnetrührer, füllen nun eine zweite Extraktion einer Probe 11 in einen zweiten Speicher, mischen den gesamten Inhalt des zweiten Speichers homogen und entnehmen nun aus dem ersten Speicher neun Zehntel und aus dem zweiten Speicher einen Zehntel, führen diesen Zehntel und die neun Zehntel zusammen und analysieren das Gesamte. Das Gesamte kann nochmals gemischt werden, sofern die nachfolgende Analyse dies nicht automatisch ausgleicht und unnötig macht.

Es ist genauso möglich eine erste Extraktion in einen ersten Speicher zu füllen und zu mischen, neun Zehntel daraus in einen zweiten Speicher zu transferieren und danach eine zweite Extraktion in diesen ersten Speicher zu füllen und zu mischen und einen Zehntel zu entnehmen und in einen dritten Speicher zu transferieren und dann den Inhalt des zweiten und dritten Speichers gemeinsam an die nachfolgende Analysemethode weiterzuleiten, wobei der zweite und der dritte Speicher auch in einem Speicher zusammengefasst werden können. Werden der zweite und dritte Speicher nicht zusammengefasst kann das Mischverhältnis auch erst durch entsprechende Entnahmemengen aus dem zweiten und dritten Speichern erzeugt werden. Das Gesamte kann nochmals gemischt werden, sofern die nachfolgende Analyse dies nicht automatisch ausgleicht. Mit dieser Methode kann jedes beliebige Verdünnungsverhältnis unter Beibehaltung der gewünschten Gesamtmenge erreicht werden.

Zurück zum Beispiel der **Kaffeeextraktion** von koffeinhaltigem Kaffee (CAF) und solchem ohne Koffein (DECAF): Anstelle von ganzen Tassen Kaffe der Typen DECAF und CAF, welche nach der Extraktion so zusammengefügt werden, dass eine entsprechend verdünnte Koffeinkonzentration in der resultierenden Tasse entsteht, gibt es eine weitere sehr interessante Variante dieses Resultat direkt zu erreichen. Nehmen wir der Einfachheit halber an, dass eine Kaffeeextraktion Hundert Sekunden dauert. Bei der Extraktion des CAF gehen wir wie folgt vor: Pro zehn Sekunden halten wir eine erste leere Tasse immer nur eine Sekunde unter die Kaffeemaschine und fangen so in zehn mal einer Sekunde nur einen Zehntel des Kaffees vom Typ CAF auf, der Rest geht in die Auffangschale und verloren, danach kommt die Extraktion des DECAF wo wir eine zweite Tasse pro zehn Sekunden neun Sekunden unter die Kaffeemaschine halten und fangen so in zehn mal neun Sekunden neun Zehntel des Kaffees vom Typ DECAF auf; nun werden die Inhalte der ersten und zweiten Tasse zusammengebracht und können gemessen werden. Wenn als zweite Tasse abermals die erste Tasse verwendet wird, erübrigt sich das zusammenbringen. Falls nötig kann die daraus resultierende Kaffeetasse mit der zehnmal geringeren Konzentration an Koffein vor der Messung noch umgerührt, also gemischt werden. Durch entsprechende zeitliche Intervalle kann jeder beliebige Koffeingehalt des Kaffees der resultierenden Tasse erreicht werden.

Die anhand des Kaffees beschriebene Möglichkeit um eine beliebige gewünschte Verdünnung einer Probe 11 zu erreichen wird **Choppen** respektive Zerstückeln des Extrakts genannt. Wird z.B. 100µl über eine Zeit von 100 Sekunden extrahiert, kann wie folgt vorgegangen werden: Von der Extraktion der Blindprobe werden die µl 1-4, 6-14, 16-24, 26-34, 36-44, 46-54, 56-64, 66-74, 76-84, 86-94, 96-100 werden in den ersten Speicher gefüllt und die µl 5, 15, 25, 35, 45, 55, 65, 75, 85, 95 verworfen sodass der erste Speicher mit 90µl gefüllt ist. Von der Extraktion der Probe 11 werden während der Extraktion die folgenden µl in den zweiten Speicher gefüllt: µl 5, 15, 25, 35, 45, 55, 65, 75, 85, 95 und die µl 1-4, 6-14, 16-24, 26-34, 36-44, 46-54, 56-64, 66-74, 76-84, 86-94, 96-100 werden verworfen. Auf diese Weise sind im ersten Speicher 90 µl der Extraktion der Blindprobe und im zweiten Speicher 10µl der Extraktion der Probe. Durch das Choppen respektive Zerstückeln der 100µl enthält auch der zweite Speicher in seinen 10µl ein repräsentatives Extraktionsprofil der ursprünglichen 100µl Extraktion. Es ist von Vorteil den ersten wie auch den zweiten Speicher nicht wesentlich grösser zu machen als dies für die zu speichernden Volumen nötig ist.

Wird das Choppen oder Zerstückeln mit noch mehr Schritten ausgeführt, entspricht das kleinere Volumen der Probe 11 noch genauer einem Teil aus dem gesamten Extraktionsprofil von 100µl. Durch eine Stückelung mit einem anderen Verhältnis als 1µl zu 9µl kann eine Probe 11 mit einer Blindprobe in jedem beliebigen Volumenverhältnis verdünnt werden, wobei das Gesamtvolumen trotzdem konstant gehalten werden kann. Das Zusammenführen des ersten und zweiten Speichers bringt Probe 11 und Blindprobe wieder zusammen und erlaubt die nachfolgende Analyse der verdünnten Probe 11. Es wäre ebenso möglich, das Extrakt der Probe 11 anstatt in den zweiten Speicher direkt in den ersten Speicher hinter das Extrakt der Blindprobe zu füllen.

Das beschriebene Choppen respektive Zerstückeln erlaubt somit eine beliebige Verdünnung der Probe 11 mit Blindprobe bei gleichbleibender Menge an Gesamtextrakt. In der Analytik kommt es immer wieder vor, dass zu hohe Konzentrationen von Proben 11 vorliegen, welche nicht gemessen werden können, da die finale Analytik bei so grossen Messsignalen sättigt und falsche Resultate liefert. Mit den beschriebenen Möglichkeiten der Verdünnung kann dieses Problem optimal gelöst werden, was von sehr grosser Bedeutung ist.

Im Falle von DBS Proben in der Pharmakokinetik besteht die Probe 11 aus Blut eines Probanden, welcher z.B. ein Medikament eingenommen hat, wobei die Medikamentenspuren im Blut die gewünschten Substanzen sind und einer Blindprobe die bis auf den Fakt, dass das Blut von einem Probanden stammt der kein Medikament eingenommen hat und somit keine Medikamentenspuren enthält, aber ansonsten zur Probe 11 identisch ist.

Eine allfällige übrigbleibende Inhomogenität, welche durch die zeitlich nacheinander getätigte Ausspülung mehrerer Speicher entsteht, kann durch einen weiteren Mischer nach dem Zusammenführen der Inhalte der Speicher auf einfache Weise kompensiert werden. Typischerweise ist hier nur ein passiver Mischer, nötig, welcher primär durch eine Verwirbelung den Flüssigkeitsstrom mischt.

Im Falle von Flüssigkeiten, wie dies z.B. in der HPLC, HPLC-MS, HPLC-MS-MS, MS oder MS-MS der Fall ist, wird durch eine erste Hochdruckpumpe, welche die Flüssigkeit in die Zuleitung 8 des Extraktionskopfs 1 befördert und diese dann als Extrakt bis in die Speicher. Aus dem Speicher wird das Extrakt in den Flüssigkeitskreislauf der nachfolgenden Methoden eingeschlauft und durch dessen Förderpumpen zum Analysegerät weiter befördert. Im Falle von anderen Medien gestaltet sich die Sache ähnlich nur werden anstelle von Hochdruckpumpen Fördersysteme für die entsprechenden Medien wie Gase und Dämpfe verwendet.

Das hier vorgestellte, vollautomatische DMS-MS Extraktionssystem vereinfacht die Analyse von DMS-Proben entscheidend und weist gegenüber der manuellen wie auch der teilweise automatisierten Technik (ausstanzen) entscheidende Vorteile auf.

Das beschriebene Extraktionssystem ist die erste ökonomische Alternative zur konventionellen Blutanalyse und unterstützt die Verbreitung dieser zeit-, kosten- und tiersparenden Technik in der Pharmakologie und Toxikologie.

Die Anlage mit der dieses Verfahren durchgeführt wird besteht aus den Teilen, welche im Oberbegriff des Anspruches 12 aufgeführt sind. Im Magazin 14 ist eine Vielzahl von Platten 10 eingeordnet. Typischerweise bestehen Platten aus einem stabileren Rahmen, welcher ein flexibles absorbierendes Material stützt. Eine gängige Ausführungsform ist ein Kartonrahmen mit einem fliessblattähnlichen flexiblen, absorbierenden und sehr saugfähigen Material. Eine stabilere Ausführung des Rahmens kann aus entsprechend haltbarerem und stärker belastbarem Material wie z.B. Kunststoff bestehen.

Der Messkopf 100 besteht aus einem optischen Sensor, wie z.B. einen Punktsensor. Eine hochstehendere Ausführung ist ein Mehrpunktsensor oder eine digitale Kamera (Smartcam), welche eine interne Auswertung mittels eines Mikroprozessors 101 je nach Datenmengen z.B. vom Typ FPGA beinhalten kann. Zusätzlich kann der Messkopf 100 mit einer Beleuchtung ausgerüstet werden, um unabhängig vom Umgebungslicht die optischen Eigenschaften von Objekten, welche dem Messkopf 100 zugeführt werden, messen zu können.

Die Robitik 25 hat die Aufgabe, die Platten 10 und die Proben 11 gemäss Anspruch 1, den Verfahrensschritten a) bis j) zu bewegen und richtig zu positionieren.

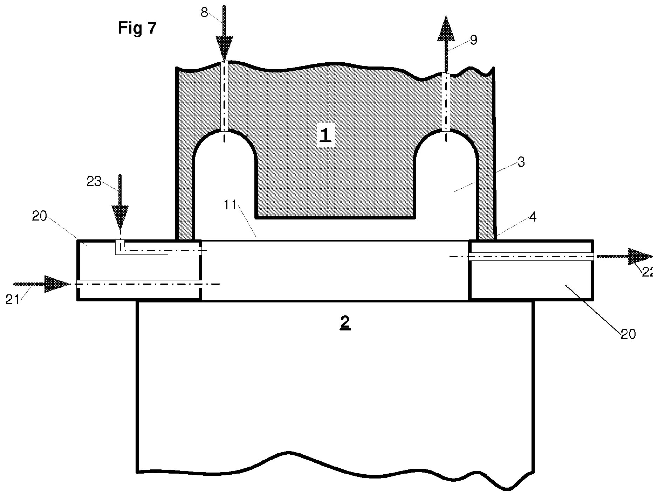

Die Spüle 20 (Fig 7) ist ein zusätzliches, den Formen des Extraktionskopfes 1 und des Gegenextraktionskopfes 2 angepasster Teil, welcher zwischen Extraktionskopf 1 und Gegenextraktionskopf 2 gebracht wird und mit diesen zusammen einen geschlossenen oder zumindest partiell geschlossenen Hohlraum bildet. Eine Spülflüssigkeit kann über die Zuleitung 8, Ableitung 9 oder einen Einlass 21 der Spüle 20 in den Hohlraum gebracht werden. Um den Hohlraum nach dem Reinigungsprozess ganz zu leeren, wird über eine Gasleitung 23 der Hohlraum ausgeblasen, ausgesaugt oder getrocknet. Um den Extraktionskopf 1 und den Gegenextraktionskopf 2 sauber zu spülen, werden die Medien der Spülflüssigkeit kontrolliert in den Hohlraum gebracht, was mit hohem Druck geschehen kann, verbleiben dort eine gewünschte Zeit und werden sodann über Ableitung 9 oder Auslass 22 mittels Gas ausgeblasen oder ausgesaugt. Das Leeren des Hohlraums erfolgt über Ableitung 9 oder einen in der Spüle 20 vorgesehenen Auslass 22. Unterstützend werden Spülmittelreste über Auslass 22 abgesaugt und der Hohlraum zwischen 1,2 und 20 z.B. von einströmendem Gas getrocknet. Es kann von Vorteil sein, wenn die Spüle so konstruiert ist, dass sie den Extraktionskopf 1 und den Gegenextraktionskopf 2, welche in einigem Abstand voneinander angeordnet sind, nur ausserhalb des Bereichs in dem sie mit der Platte 10 und Probe 11 in Kontakt kommen berührt. In dieser Anordnung dichtet die Spüle 20 den für den Waschprozess erweiterten Hohlraum 3 gegen den Extraktionskopf 1 aussen und die Fläche des Gegenextraktionskopfes 2 (Fig 6) ab. Diese Anordnung ermöglicht ebenfalls die Reinigung im Bereich der Dichtkante 4. Die Spüle 20 steht als Einrichtungsteil bereit und kann bei bedarf durch die Robotik 25 dem Extraktionskopf 1 und dem Gegenextraktionskopf 2 zugeführt werden.

Der Mikroprozessor 101 ist, die Einheit, welche die Steuerung der Gesamtanlage vornimmt. Typischerweise eine SPS oder sonstige Elektronikkomponente mit einer Recheneinheit und einer Firmware oder Software. Es bestehen Verbindungen zu weiteren Komponenten des Systems.

Der Auftragekopf 24 ist, ein System, welches einen Internen Standard in flüssiger Form auf die Probe 11 aufbringt. Ein Interner Standard ist eine zur Substanz sich sehr ähnliche verhaltende Referenzsubstanz, welche in der MS Analyse klar von der Substanz unterschieden werden kann. Mit der Messung des Internen Standards kann die Absolute Messintensität der MS-Analyse geeicht werden, wenn die Menge des Internen Standards genau bekannt ist. Dies kann in flüssiger Form z.B. mittels Sprühen, Vernebeln, Mikrotropfen, Prozessen aus der Drucktechnologie wie Inkjet, Pipejet oder elektrischen Feldern erfolgen. Der bevorzugte Prozess ist die Aufsprühung mit Luft, da die genauen aufgebrachten Mengen sehr präzise vorgenommen werden können.

## Patentansprüche

1. Verfahren zur automatischen Erfassung biologischer Substanzen für Analysen auf Platten (10) aufgebrachter Proben (11), bei dem
a) in einem Magazin (14), in dem eine große Anzahl Platten (10) gelagert sind,
b) ein Greifer (15) jeweils eine Platte (10) im Magazin (14) fasst und zur Erkennung einem Messkopf (100) zuführt,
c) der Messkopf (100) mittels Sensoren die Position und die Form der Proben (11) erkennt,
d) ein Mikroprozessor (101) deren Position und Form analysiert,
e) die relative Ausrichtung eines Extraktionskopfes (1) und eines Gegenextraktionskopfes (2) zur Platte (10) durch den Mikroprozessor (101) eingestellt wird,
f) der Extraktionskopf (1) und der Gegenextraktionskopf (2), welche durch Einklemmen der Platte (10) eine Dichtkante (4) bilden, welche die Probe (11) räumlich dicht umschließt, damit die gewünschten Substanzen und möglichst wenig störende Matrix aus der Probe (11) extrahiert werden können, indem eine Flüssigkeit über eine Zuleitung (8) zugeführt wird, die Probe (11) durchströmt und über eine Ableitung (9) abfließt,
g) der Extraktionskopf (1) und der Gegenextraktionskopf (2) von Rückständen gereinigt werden, wobei, um den Extraktionskopf (1) und Gegenextraktionskopf (2) sauber zu spülen, eine Spülflüssigkeit über die Zuleitung (8), die Ableitung (9) oder einen Einlass (21) einer zusätzlich eingeführten Spüle (20) in den Hohlraum gebracht wird, diese Spülflüssigkeit dort eine gewünschte Zeit verbleibt und sodann über die Ableitung (9) oder einen Auslass (22) der Spüle (20) mittels Gas ausgeblasen oder ausgesaugt wird,
h) der Messkopf (100) mit der nächsten Probe (11) zusammengeführt wird,
i) der Ablauf des Prozesses sich von c) bis h) mit der neuen Probe (11) wiederholt bis alle gewünschten Proben (11) auf einer Platte (10) verarbeitet sind,
j) der Greifer (15) die Platte (10) ins Magazin (14) zurück führt,
k) der Vorgang nach b) bis j) wiederholt wird, bis alle gewünschten Platten (10) eines Magazins (14) geprüft sind,
l) nach jedem Extraktionsprozess gemäß f die gewünschten Substanzen und Matrix zur Weiterverarbeitung weitergereicht werden.

2. Verfahren gemäß Anspruch 1,
**dadurch gekennzeichnet,**
**dass** der Messkopf (100) einen auf der Platte (10) vorhandenen Erkennungscode erfasst und die Probenidentität sicher stellt.

3. Verfahren gemäß Anspruch 1,
**dadurch gekennzeichnet,**
**dass** der Messkopf (100) nach dem Extraktionsprozess gemäß f die optischen Eigenschaften der Probe (10) auf korrekten Verfahrensablauf überprüft.

4. Verfahren gemäß Anspruch 1,
**dadurch gekennzeichnet,**
**dass** die aus einer Probe (11) extrahierten gewünschten Substanzen und Matrix zur Weiterverarbeitung in einem Behälter zwischengelagert werden und danach mit gängigen Autosamplern weiterverarbeitet werden können.

5. Verfahren gemäß Anspruch 1,
**dadurch gekennzeichnet,**
**dass** die aus der Probe (11) extrahierten gewünschten Substanzen und Matrix zur Weiterverarbeitung in einem Speicher zwischengelagert werden und danach an das weiterverarbeitende System weitergereicht werden.

6. Verfahren gemäß Anspruch 1,
**dadurch gekennzeichnet,**
**dass** die aus der Probe (11) extrahierten gewünschten Substanzen und Matrix zur Weiterverarbeitung in einer "Trapping Column" temporär die gewünschten Substanzen absorbiert werden und danach durch ein anderes Lösungsmittel wieder von dieser "Trapping Column" losgelöst werden und an das weiterverarbeitende System weitergereicht werden.

7. Verfahren gemäß Anspruch 1,
**dadurch gekennzeichnet,**
**dass** die aus der Probe (11) extrahierten gewünschten Substanzen und Matrix zur Weiterverarbeitung in einem ersten Speicher zwischengelagert werden, eine weitere Extraktion gemäß f aus einer Blindprobe in mindestens einem weiteren Speicher zwischengelagert werden und danach die Inhalte der verschiedenen Speicher in einem solchen Verhältnis zusammengebracht werden, dass die gewünschten Substanzen in verdünnter Form und die Matrix in unverdünnter Form weitergereicht werden können.

8. Verfahren nach Anspruch 7,
**dadurch gekennzeichnet,**
**dass** die Extraktionen aus der Probe (11) und einer Blindprobe vor dem Zusammenbringen so aufbereitet ist, dass auch bei der Verwendung von nur einem Bruchteil einer der Extraktion dieser Bruchteil eine identische Zusammensetzung der gesamten Extraktion aus welcher er entstanden ist, darstellt.

9. Verfahren nach Anspruch 1,
**dadurch gekennzeichnet,**
**dass** über ein Aufragekopf (24) nach der Erkennung der Proben (10) gemäß c ein interner Standard als Referenz auf die Probe (10) aufgebracht wird.

10. Verfahren nach Anspruch 9,
**dadurch gekennzeichnet,**
**dass** der interne Standard aufgesprüht wird und die Probe (10) mindestens teilweise durchdringt.

11. Verfahren nach Anspruch 7, 8, 9 oder 10,
**dadurch gekennzeichnet,**
**dass** mindestens zwei Speicher unterschiedlicher Größe verwendet werden.

12. Vorrichtung umfassend eine Steuereinrichtung zur Durchführung des Verfahrens nach Anspruch 1,
**dadurch gekennzeichnet,**
**dass** die Anlage ein Magazin (14) für die Platten (10), einen Greifer (15), einen Messkopf (100) mit einem Extraktionskopf (1) und einem Gegenextraktionskopf (2), einen Mikroprozessor (101), sowie eine Robotik (25) aufweist, wobei der Mikroprozessor (101) die Robotik (25) steuert und kontrolliert, wobei zum Reinigen des Extraktionskopfes (1) und des Gegenextraktionskopfes (2) Spülflüssigkeit einbringbar ist.

13. Vorrichtung nach Anspruch 12,
**dadurch gekennzeichnet,**
**dass** der Extraktionskopf (1) mit dem Gegenextraktionskopf (2) und der dazwischen liegenden Platte (10) mit der Probe (11) einen mit Dichtkante (4) umfangenden Hohlraum (3) bilden, wobei dieser Hohlraum (3) mit einer Zuleitung (8) sowie einer Ableitung (9) versehen ist und der Hohlraum (3) in geschlossenem Zustand von einer Dichtlinie umfangen ist, welche durch die Dichtkante (4) des Extraktionskopfs (1), die eingeklemmte Probe (1) und die flach auf dem Gegenextraktionskopf (2) liegende Platte (10) gebildet ist, so dass der Extraktionskopf (1) mit Probe (11), Platte (10) und Gegenextraktionskopf (2) im zusammengeführten Zustand einen vollständig abgeschlossenen und gegen außen isolierten Hohlraum (3) bilden.

14. Vorrichtung nach Anspruch 12,
**dadurch gekennzeichnet,**
**dass** die Platten (10) im Magazin (14) eingeordnet sind.

15. Vorrichtung nach Anspruch 12,
**dadurch gekennzeichnet,**
**dass** die Platten (10) aus flexiblem absorbierenden Material bestehen.

16. Vorrichtung nach Anspruch 12,
**dadurch gekennzeichnet,**
**dass** der Greifer (15) die Platten (10) mindestens zu einem wesentlichen Teil an ihren Längsseiten mit geeigneten Mitteln führend und fixierend greift und hält.

17. Vorrichtung nach Anspruch 12,
**dadurch gekennzeichnet,**
**dass** der Greifer (15) die Platten (10) mindestens zu einem wesentlichen Teil an ihren Breitseiten mit geeigneten Mitteln führend und fixierend greift und hält.

18. Vorrichtung nach Anspruch 12,
**dadurch gekennzeichnet,**
**dass** der Greifer (15) die Platten (10) zu einem wesentlichen Teil an ihren Längs- und Breitseiten mit geeigneten Mitteln führend und fixierend greift und hält.

19. Vorrichtung nach Anspruch 16, 17 oder 18,
**dadurch gekennzeichnet,**
**dass** der Greifer (15) Strukturen aufweist, welche in das Material der Platten (10) an deren Oberfläche eindringen und die Platten (10) flach halten.

20. Vorrichtung nach einem der Ansprüche 12 bis 19,
**dadurch gekennzeichnet,**
**dass** zusätzlich eine Spüle (20) vorhanden ist, die mindestens eine der folgenden Vorrichtungen aufweist: einen Auslass (22), einen Einlass (21), und/oder eine Zuführung (23).

21. Vorrichtung nach Anspruch 12,
**dadurch gekennzeichnet,**
**dass** das der Messkopf (100) mindestens einen der folgenden optischen Sensoren aufweist: einen Spotpositions-Sensor, einen Helligkeitssensor, einen Kontursensor, einen Barcodeerkennungssensor.

22. Vorrichtung nach Anspruch 21,
**dadurch gekennzeichnet**,
der Messkopf (100) einen alle Funktionen wahrnehmenden Sensor aufweist.

23. Vorrichtung nach Anspruch 12,
**dadurch gekennzeichnet,**
**dass** die Distanz zwischen dem Extraktionskopf (1) und dem Gegenextraktionskopf (1) und dem Gegenextraktionskopf (2) im geschlossenen Zustand im Bereich der Dichtlinie der Dichtkante (4) eine präzise Distanz größer als Null Millimeter und kleiner als die halbe Plattendicke aufweist.

## Claims

1. A method for automatically detecting biological substances for analyses of samples (11) applied to plates (10),
wherein
a) in a magazine (14), in which a large number of plates (10) are stored,
b) a gripper (15) takes hold of one plate (10) in the magazine (14) and delivers it to a measuring head (100) for identification,
c) the measuring head (100) identifies the position and the shape of the samples (11) by means of sensors,
d) a microprocessor (101) analyzes their position and shape,
e) the relative orientation of an extraction head (1) and of a counterpart extraction head (2) with respect to the plate (10) is adjusted by the microprocessor (101),
f) the extraction head (1) and the counterpart extraction head (2), which form a sealing edge (4) by clamping the plate (10), the sealing edge (4) spatially tightly enclosing the sample (11), so that the desired substances, and as little as possible of interfering matrix can be extracted from the sample (11) by having a flushing fluid introduced via an admission line (8), running through the sample (11) and running off via a discharge line (9),
g) the extraction head (1) and the counterpart extraction head (2) are cleaned of residues, wherein, in order to rinse the extraction head (1) and the counterpart extraction head (2) clean, a flushing fluid is brought into the cavity via admission line (8), the discharge line (9) or an inlet (21) of an additional wash unit (20), the flushing fluid remaining there for a desired time before being blown or sucked out with gas via the discharge line (9) or an outlet (22) of the wash unit (20),
h) the measuring head (100) is brought together with the next sample (11),
i) the sequence of the process from c) to h) is repeated with the new sample (11) until all the desired samples (11) on a plate (10) are processed,
j) the gripper (15) returns the plate (10) into the magazine (14),
k) the procedure according to b) to j) is repeated until all the desired plates (10) of a magazine (14) are tested,
l) after each extraction process according to f, the desired substances and matrix are forwarded for further processing.

2. The method of claim 1,
wherein
the measuring head (100) detects an identification code present on the plate (10) and establishes the sample identity.

3. The method of claim 1,
wherein
the measuring head (100), after the extraction process according to f), checks the optical properties of the sample (11) for the correct processing sequence.

4. The method of claim 1,
wherein
the desired substances and matrix extracted from a sample (11) are stored in a container pending further processing and can subsequently be further processed using conventional autosamplers.

5. The method of claim 1,
wherein
the desired substances and matrix extracted from the sample (11) are stored in a storage vessel pending further processing and can subsequently be forwarded to the further processing system.

6. The method of claim 1,
wherein
the desired substances and matrix extracted from the sample (11) are temporarily absorbed in a "trapping column" pending further processing, and are subsequently released again from this "trapping column" by another solvent and forwarded to the further processing system.

7. The method of claim 1,
wherein
the desired substances and matrix extracted from the sample (11) are stored in a first storage vessel pending further processing, a further extraction according to f) from a blank sample is stored temporarily in at least one further storage vessel and, thereafter, the contents of the different storage vessels are brought together in such a ratio that the desired substances can be forwarded in diluted form and the matrix in undiluted form.

8. The method of claim 7,
wherein
the extractions from the sample (11) and a blank sample are prepared, before being brought together, in such a way that, even when only a fraction of an extraction is used, this fraction represents an identical composition to the entire extraction from which it has been obtained.

9. The method of claim 1,
wherein
after the identification of the samples (10) according to c), an internal standard is applied to the sample (10) as reference via an applicator head (24).

10. The method of claim 9,
wherein
the internal standard is sprayed on and at least partially penetrates the sample (10).

11. The method of claim 7, 8, 9 or 10,
wherein
at least two storage vessels of different size are used.

12. A device comprising a steering unit for carrying out the method of claim 1,
wherein
the installation has a magazine (14) for the plates (10), a gripper (15), a measuring head (100) with an extraction head (1) and with a counterpart extraction head (2), a microprocessor (101) as well as a robot (25), wherein the microprocessor (101) steers and controls the robot (25), wherein flushing fluid can be brought in to clean the extraction head (1) and the counterpart extraction head (2).

13. The device of claim 12,
wherein
the extraction head (1) with the counterpart extraction head (2) and, lying between them, the plate (10) with the sample (11) form a cavity (3) surrounded by sealing edge (4), wherein this cavity (3) is provided with an admission line (8) and a discharge line (9), and the cavity (3), in the closed state, is surrounded by a sealing line which is defined by the sealing edge (4) of the extraction head (1), the clamped-in sample (11) and the plate (10) lying flat on the counterpart extraction head (2), such that the extraction head (1) with the sample (11), the plate (10) and the counterpart extraction head (2), when brought together, form a completely closed cavity (3) isolated from the outside.

14. The device of claim 12,
wherein
the plates (10) are arranged in the magazine (14).

15. The device of claim 12,
wherein
the plates (10) are made of flexible absorbent material.

16. The device of claim 12,
wherein
the gripper (15) grips and holds the plates (10) at least along a substantial part of their long sides and guides and fixes them by suitable means.

17. The device of claim 12,
wherein
the gripper (15) grips and holds the plates (10) at least along a substantial part of their short sides and guides and fixes them by suitable means.

18. The device of claim 12,
wherein
the gripper (15) grips and holds the plates (10) along a substantial part of their long and short sides and guides and fixes them by suitable means.

19. The device of claim 16, 17 or 18,
wherein
the gripper (15) has structures which penetrate into the material on the surface of the plates (10) and hold the plates (10) flat.

20. The device of claim 12,
wherein
an additional wash unit (20) is present, which has at least one of the following devices: an outlet (22), an inlet (21), and/or a supply (23).

21. The device of claim 12,
wherein
the measuring head (100) has at least one of the following optical sensors: a spot position sensor, a brightness sensor, a contour sensor, a bar code recognition sensor.

22. The device of claim 21,
wherein
the measuring head (100) has a sensor performing all functions.

23. The device of claim 12,
wherein
the distance between the extraction head (1) and the counterpart extraction head (2), in the closed state, in the area of the sealing line of the sealing edge (4), has a precise distance greater than zero millimeters and smaller than half the plate thickness.

## Revendications

1. Procédé de détection automatique de substances biologiques pour des analyses d'échantillons (11) appliqués sur des plaques (10), où:
a) dans un magasin (14), dans lequel un grand nombre de plaques (10) sont rangées,
b) un préhenseur (15) saisit à chaque fois une plaque (10) dans le magasin (14) et l'amène à une tête de mesure (100) pour la reconnaissance,
c) la tête de mesure (100) reconnaît la position et la forme des échantillons (11) avec des senseurs,
d) un microprocesseur (101) analyse leur forme et leur position,
e) la disposition relative d'une tête d'extraction (1) et d'une contre-tête d'extraction (2) par rapport à la plaque (10) est mise au point par le microprocesseur (101),
f) la tête d'extraction (1) et la contre-tête d'extraction (2), lesquelles forment par pincement de la plaque (10) une arête d'étanchéité (4), laquelle confine l'échantillon (11) spatialement de manière étanche, afin que les substances souhaitées et aussi peu de matrice interférente que possible puissent être extraites de l'échantillon (11) en ce qu'un liquide est amené par une conduite d'amenée (8), traverse l'échantillon (11) et s'écoule par une conduite de dérivation (9),
g) la tête d'extraction (1) et la contre-tête d'extraction (2) sont nettoyées des résidus, un liquide de rinçage étant amené dans la cavité par la conduite d'amenée (8), la conduite de dérivation (9) ou une entrée (21) d'un rinceur (20) introduit de manière supplémentaire afin de rincer proprement la tête d'extraction (1) et la contre-tête d'extraction (2), ce liquide de rinçage y restant un temps souhaité et étant ensuite soufflé ou aspiré au-dehors avec du gaz par une conduite de dérivation (9) ou une sortie (22) du rinceur,
h) la tête de mesure (100) est jointe avec l'échantillon (11) suivant,
i) le déroulement du procédé de c) à h) est répété avec un nouvel échantillon (11) jusqu'à ce que tous les échantillons (11) souhaitées sur une plaque (10) soient traités,
j) le préhenseur (15) ramène la plaque (10) dans le magasine (14),
k) le processus de b) à j) est répété jusqu'à ce que toutes les plaques (10) souhaitées d'un magasine (14) soient testées,
l) après chaque processus d'extraction selon f, les substances souhaitées et la matrice sont transmises à un post-traitement.

2. Procédé selon la revendication 1,
**caractérisé en ce que**
la tête de mesure (100) acquiert un code de reconnaissance présent sur la plaque (10) et vérifie l'identité des échantillons.

3. Procédé selon la revendication 1,
**caractérisé en ce que**
la tête de mesure (100) contrôle, après le processus d'extraction selon f, les propriétés optiques de l'échantillon (10) pour déroulé correct du procédé.

4. Procédé selon la revendication 1,
**caractérisé en ce que**
les substances souhaitées et la matrice extraites de l'échantillon (11) sont stockées de manière transitoire dans un récipient à des fins de post-traitement et peuvent ensuite être traitées avec des échantillonneurs automatiques courants.

5. Procédé selon la revendication 1,
**caractérisé en ce que**
les substances souhaitées et la matrice extraites de l'échantillon (11) sont stockées de manière intermédiaire dans un récipient à des fins de post-traitement et sont ensuite transmises au système de post-traitement.

6. Procédé selon la revendication 1,
**caractérisé en ce que**
les substances souhaitées et la matrice extraites de l'échantillon (11) sont absorbées temporairement dans une « Trapping Column » à des fins de post-traitement et ensuite à nouveau libérées de cette « Trapping Column » par un autre solvant et transmises au système de post-traitement.

7. Procédé selon la revendication 1,
**caractérisé en ce que**
les substances souhaitées et la matrice extraites de l'échantillon (11) sont stockées de manière transitoire dans un premier réservoir à des fins de post-traitement,
une extraction supplémentaire selon f d'un échantillon à blanc est stocké de manière transitoire dans au moins un réservoir supplémentaire, et qu'ensuite les contenus des différents réservoirs sont réunis dans un ratio tel que les substances souhaitées puissent être transmises sous forme diluée, et la matrice sous forme non diluée.

8. Procédé selon la revendication 7,
**caractérisé en ce que**
les extractions de l'échantillon (11) et de l'échantillon à blanc sont, avant leur réunion, préparées de façon à ce que même lors de l'utilisation d'une seule fraction de l'une des extractions, cette fraction ait une composition identique à celle de l'extraction complète dont elle résulte.

9. Procédé selon la revendication 1,
**caractérisé en ce que**
un standard interne est appliqué sur l'échantillon (10) en tant que référence par une tête d'application (24) après la reconnaissance des échantillon (10) d'après c.

10. Procédé selon la revendication 9,
**caractérisé en ce que**
le standard interne est pulvérisé et pénètre au moins partiellement l'échantillon (10).

11. Procédé selon la revendication 7, 8, 9 ou 10,
**caractérisé en ce que**
au moins deux réservoirs de tailles différentes sont utilisés.

12. Dispositif comprenant une dispositif de pilotage pour l'exécution du procédé selon la revendication 1,
**caractérisé en ce que**
l'installation présente un magasin (14) pour les plaques (10), un préhenseur (15), une tête de mesure (100) avec une tête d'extraction (1) et une contre-tête d'extraction (2), un microprocesseur (101) ainsi qu'une robotique (25), le microprocesseur (101) pilotant et contrôlant la robotique (25), et du liquide de rinçage pouvant être apporté pour le nettoyage de la tête d'extraction (1) et de la contre-tête d'extraction (2).

13. Dispositif selon la revendication 12,
**caractérisé en ce que**
la tête d'extraction (1) forme, avec la contre-tête d'extraction (2) et la plaque (10) se trouvant entre les deux avec l'échantillon (11), une cavité (3) entourée par une arête d'étanchéité (4), cette cavité étant pourvue d'une conduite d'amenée (8) ainsi que d'une conduite de dérivation (9), et la cavité (3) étant entourée, dans l'état fermé, par une ligne d'étanchéité, laquelle est formée par l'arête d'étanchéité (4) de la tête d'extraction (1), l'échantillon pincé (1) et la plaque (10) reposant à plat sur la contre-tête d'extraction (2), de manière à ce que la tête d'extraction avec l'échantillon (11), la plaque (10) et la contre-tête d'extraction (2) forment, dans l'état où ils sont joints, une cavité (3) complètement fermée et isolée de l'extérieur.

14. Dispositif selon la revendication 12,
**caractérisé en ce que**
les plaques (10) sont arrangées dans le magasine (14).

15. Dispositif selon la revendication 12,
**caractérisé en ce que**
les plaques (10) sont constituées d'un matériau flexible absorbant.

16. Dispositif selon la revendication 12,
**caractérisé en ce que**
le préhenseur (15) saisit les plaques (10) de manière guidante et fixe et les maintient, avec des moyens appropriés, essentiellement par leurs côtés longs.

17. Dispositif selon la revendication 12,
**caractérisé en ce que**
le préhenseur (15) saisit les plaques (10) de manière guidante et fixe et les maintient, avec des moyens appropriés, essentiellement par leurs côtés larges.

18. Dispositif selon la revendication 12,
**caractérisé en ce que**
le préhenseur (15) saisit les plaques (10) de manière guidante et fixe et les maintient, avec des moyens appropriés, essentiellement par leurs côtés longs et larges.

19. Dispositif selon la revendication 16, 17 ou 18,
**caractérisé en ce que**
le préhenseur (15) présente des structures qui pénètrent le matériau des plaques (10) à leur surface et maintiennent les plaques (10) à plat.

20. Dispositif selon l'une des revendications 12 à 19,
**caractérisé en ce que**
un rinceur (20) est présent de manière supplémentaire, lequel présente au moins l'un des dispositifs suivants : une sortie (22), une entrée (21) et/ou une admission (23).

21. Dispositif selon la revendication 12,
**caractérisé en ce que**
la tête de mesure (100) présente au moins l'un des senseurs optiques suivants : un senseur de position ponctuelle, un senseur de luminosité, un senseur de contours, un senseur de reconnaissance de codes-barres.

22. Dispositif selon la revendication 21,
**caractérisé en ce que**
la tête de mesure (100) présente un senseur qui remplit toutes les fonctions.

23. Dispositif selon la revendication 12,
**caractérisé en ce que**
la distance entre la tête d'extraction (1) et la contre-tête d'extraction (1) et la contre-tête d'extraction (2) dans la région de la ligne d'étanchéité de l'arête d'étanchéité (4) présente dans l'étant fermé une distance précise supérieure à zéro millimètres et plus petite que la moitié de l'épaisseur de la plaque.
